# EUROPÄISCHE PATENTANMELDUNG

(11) **EP 4 722 003 A1**
(43) Veröffentlichungstag der Anmeldung: **08.04.2026**
(21) Anmeldenummer: 25200758.8
(22) Anmeldetag: 08.09.2025
(51) Int. Cl.: B60C 11/03, B60C 11/11, B60C 11/13

(54) **FAHRZEUGREIFEN UND LAUFSTREIFEN MIT SCHNEEKANTEN, LOKAL KOMBINIERT MIT FASEN**

(30) Priorität: 07.10.2024 DE 102024209753
(71) Anmelder: Continental Reifen Deutschland GmbH, 30175 Hannover (DE)
(72) Erfinder: Heinhaupt, Torsten, 30175 Hannover (DE); Javagal Suresh, Swaroop Sharma, 30175 Hannover (DE); Herbst, Stephan, 30175 Hannover (DE); Behr, Ulrich, 30175 Hannover (DE); Brandau, Christian, 30175 Hannover (DE)
(74) Vertreter: Continental Corporation

(57) **Zusammenfassung**

Laufstreifen (1) für einen Fahrzeugreifen (2), wobei in dem Laufstreifen (1) radial unterhalb einer Basisfläche (3) Rillenvolumen (4) ausgespart ist, wobei das Rillenvolumen (4) seitlich von Flankenfläche (5) begrenzt wird, wobei unterhalb der Basisfläche (3) und hinter der Flankenfläche (5) in den Laufstreifen (1) zurücktretendes Fasenvolumen (6) ausgespart ist, wobei radial oberhalb der Basisfläche (3) verlaufendes Vorsprungvolumen (7) ausgebildet ist, wobei das Fasenvolumen (6) und das Vorsprungvolumen (7) abschnittsweise in einem Abstand von weniger als 1 mm nebeneinander verlaufen.

Das Vorsprungvolumen (7) verläuft abschnittsweise in einem Abstand von weniger als 1 mm neben dem Rillenvolumen (4), ohne neben Fasenvolumen (6) zu verlaufen.

## Beschreibung

Die Erfindung betrifft einen Laufstreifen für einen Fahrzeugreifen, wobei in dem Laufstreifen radial unterhalb einer Basisfläche Rillenvolumen ausgespart ist, wobei das Rillenvolumen seitlich von Flankenfläche begrenzt wird, wobei unterhalb der Basisfläche und hinter der Flankenfläche in den Laufstreifen zurücktretendes Fasenvolumen ausgespart ist, wobei radial oberhalb der Basisfläche verlaufendes Vorsprungvolumen ausgebildet ist, wobei das Fasenvolumen und das Vorsprungvolumen abschnittsweise in einem Abstand von weniger als 1 mm nebeneinander verlaufen.

Es ist an sich bekannt, Vorsprünge in Laufsteifen auszubilden. Insbesondere können Profilblöcke mit radial vorstehenden Kantenbereichen versehen werden, wobei letztere als Schneekanten einen Milling-Effekt erzielen und die Traktion auf Schnee verbessern können. Üblicherweise sind Schneekanten direkt an der Rillenflanke einer Profilrille bzw. am Rande eines Profilblocks ausgebildet oder weisen in geringem Abstand einen parallelen Verlauf zu diesen auf. Hierdurch kann in einer Richtung senkrecht zu dem Vorsprungverlauf ein besonders guter Schneegriff erzielt werden. Zudem kann mit Vorsprungvolumen eine Reduktion des Abrollgeräusches erzielt werden. Nachteile von Vorsprüngen sind eine verringerte Performance des Laufstreifens auf trockenem Fahrbahnuntergrund sowie ein erhöhter Rollwiderstand.

Es ist weiterhin an sich bekannt, Kanten von Profilblöcken mit Fasen zu versehen. Fasen können ein Bremsverhalten eines Laufstreifens verbessern, insbesondere auf trockenem Fahrbahnuntergrund, indem ein sogenannter Roll-in-Effekt an den Bremskanten des Profils vermieden oder zumindest verringert wird. Nachteile von Fasen sind eine reduzierte Reifenoberfläche und somit ein verringerter Reibwert, insbesondere auf winterlichem Untergrund, sowie ein vergrößertes Profilnegativ, was das Abrollgeräusch des Reifens negativ beeinflussen kann.

WO 2024051901 A1 beschreibt einen Fahrzeugreifen, in welchem die vorteilhaften Eigenschaften einer Fase und einer Schneekante kombiniert werden. Eine Kombination aus Fasen- und Vorsprungvolumen ist somit grundsätzlich bekannt. Es bleibt jedoch eine Herausforderung, die Vorteile von Fasen und Vorsprüngen optimal zu nutzen und hierbei Auswirkungen der diesen Profilmerkmalen inhärenten Nachteile möglichst gering zu halten.

Der Erfindung liegt die Aufgabe zugrunde, den Zielkonflikt auf einem höheren Niveau als bisher bekannt zu lösen und insbesondere einen Laufstreifen bzw. einen Fahrzeugreifen mit guten Trockenbremseigenschaften sowie exzellenter Traktion und geringem Abrollgeräusch zu schaffen.

Die Aufgabe wird erfindungsgemäß dadurch gelöst, dass Vorsprungvolumen abschnittsweise in einem Abstand von weniger als 1 mm neben dem Rillenvolumen verläuft, ohne neben Fasenvolumen zu verlaufen.

Die Erfindung erkennt, dass an unterschiedlichen Positionen in einem Laufstreifen unterschiedliche Anforderungen an dessen Profilierung bestehen können. Die unterschiedlichen Anforderungen können theoretisch vorhergesagt oder im Versuch, beispielsweise anhand von Abnutzungsanalysen ermittelt werden. Es stellt sich überraschend heraus, dass ein Verzicht auf Fasenvolumen an ausgewählten Positionen im Laufstreifen das Brems- und Handlingverhalten auf trockenem Fahrbahnuntergrund nicht maßgeblich verschlechtert, sodass die erwartbaren Vorteile dieses Verzichts für den Reibwert und die Geräuschreduktion ohne nennenswerten Nachteil nutzbar werden. Insbesondere stellt sich heraus, dass Vorsprünge an ausgewählten Positionen auch ohne Kombination mit Fasen ihre Vorteile entfalten können, ohne dass erwartbare Nachteile in der Reifenperformance zu sehr zur Geltung kommen.

Sofern im vorliegenden Text die Richtungsbezeichnungen axial, in Axialrichtung, radial, in Radialrichtung und in Umfangsrichtung verwendet werden, beziehen sich diese auf den bestimmungsgemäß an einem Fahrzeugreifen angebrachten Laufstreifen bzw. den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 180° Umdrehung des Fahrzeugreifens früher einen minimalen Abstand zum Fahrbahnuntergrund als eine in Umfangsrichtung hintere Position. Die Axialrichtung bezieht sich auf eine Richtung parallel zur Drehachse. Axial nach innen zeigend bezieht sich dabei auf eine Orientierung, die einem Reifenäquator, einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Laufstreifens verlaufen. Die Basisfläche fällt zusammen mit jener glatten Oberfläche, welche der Laufstreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner oder gleich einer maximale Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein und mit einer Lauffläche des Laufstreifens zusammenfallen. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine Schneekante auf dem Laufstreifen angeordnet ist, verläuft die Basisfläche als imaginäre Fläche unter der Schneekante weiter.

Alle beschriebenen Merkmale beziehen sich insbesondere auf einen Neuzustand des Laufstreifens. Die mit den Merkmalen des Hauptanspruchs erzielten Effekte können durch bevorzugte Ausführungsformen und Ausgestaltungen unterstützt und weiter verstärkt werden.

Rillenvolumen kann in Form von breiten Rillen und/oder in Form von schmalen Rillen vorliegen, wobei breite Rillen eine Breite von wenigstens 2 mm und wobei schmale Rillen eine Breite von weniger als 2 mm aufweisen können. Schmale Rillen können auch als Einschnitte oder Lamellen bezeichnet werden bzw. solche bezeichnen.

Der Abstand zwischen dem Vorsprungvolumen und dem Fasenvolumen bzw. dem Rillenvolumen wird zwischen einer dem Fasenvolumen bzw. dem Rillenvolumen zugewandten Seite des Vorsprungvolumens auf der einen Seite und einer dem Vorsprungvolumen zugewandten Seite des Fasenvolumens bzw. des Rillenvolumens auf der anderen Seite ermittelt. Der Abstand kann auch 0 mm betragen
Das Rillenvolumen wird insofern seitlich von Flankenfläche begrenzt, als das Rillenvolumen in Umfangs- und/oder Axialrichtung Rillenflanken mit entsprechender Flankenfläche aufweisen kann. Die Rillenflanken können parallel zur Radialrichtung ausgerichtet sein, sodass das Rillenvolumen in radialer Richtung eine konstante Breite beibehält; gemäß bevorzugten Ausführungsformen weitet sich das Rillenvolumen nach radial oben leicht auf, was durch gegenüber der Radialrichtung unter einem Winkel in einem Bereich zwischen 2° und 15° geneigte Flankenflächen erreicht werden kann. Zwei einander gegenüberliegende Rillenflanken können am radialen Grund des Rillenvolumens über einen Rillenboden miteinander verbunden sein. Übergänge zwischen den Rillenflanken und dem Rillenboden können mit geeignete Radien verrundet sein.

Das Rillenvolumen endet an einer gemeinsamen Grenzlinie mit dem Fasenvolumen und geht an der Grenzlinie in dieses über. Insbesondere geht die das Rillenvolumen mit definierende Flankenfläche an der Grenzlinie in eine Fasenfläche über, wobei die Fasenfläche sich zwischen der Grenzlinie und der Basisfläche des Laufstreifens erstreckt. Das Fasenvolumen bzw. die Fasenfläche können direkt an das Vorsprungvolumen angrenzen oder an eine mit der Basisfläche zusammenfallende Laufstreifenoberfläche, in welchem Falle die Laufstreifenoberfläche innerhalb von weniger als 1 mm zu dem Vorsprungvolumen führen kann. Vorsprungvolumen verläuft dann abschnittsweise in einem Abstand von weniger als 1 mm neben dem Rillenvolumen, ohne neben Fasenvolumen zu verlaufen, wenn kein Fasenvolumen zwischen dem Vorsprungvolumen und dem Rillenvolumen ausgespart ist.

Generell kann in einem Laufstreifen an jede Flankenfläche eine Fasenfläche angrenzen. Generell ist eine maximale Anordnungskapazität von Fasenvolumen folglich durch das Rillenvolumen und dessen Anordnung begrenzt. Im Sinne der Erfindung wird diese maximale Anordnungskapazität jedenfalls insofern nicht vollständig ausgeschöpft, als Vorsprungvolumen abschnittsweise in einem Abstand von weniger als 1 mm neben dem Rillenvolumen verläuft, ohne neben Fasenvolumen zu verlaufen.

Vorzugsweise beträgt ein Verhältnis zwischen einer Gesamtlänge an Abschnitten, entlang derer Vorsprungvolumen in einem Abstand von weniger als 1 mm neben dem Rillenvolumen verläuft, ohne neben Fasenvolumen zu verlaufen, zu einer Gesamtlänge an Abschnitten, entlang derer das Fasenvolumen und das Vorsprungvolumen in einem Abstand von weniger als 1 mm nebeneinander verlaufen, zwischen 0,5 und 2.

Grundsätzlich kann überall dort, wo Platz auf der Basisfläche ist, um Vorsprungvolumen in einem Abstand von weniger als 1 mm neben Fasenvolumen verlaufen zu lassen bzw. um Vorsprungvolumen in einem Abstand von weniger als 1 mm neben dem Rillenvolumen verlaufen zu lassen, Vorsprungvolumen im Sinne der Erfindung auf dem Laufstreifen angeordnet werden, was einer maximalen Anordnungskapazität von Vorsprungvolumen entspräche. Vorzugsweise wird die maximale Anordnungsmöglichkeit von Vorsprungvolumen zu wenigstens 50% ausgeschöpft. Gemäß einer Ausführungsform der Erfindung verläuft abschnittsweise jedoch kein Vorsprungvolumen neben dem Rillenvolumen. Auf diese Weise kann der Rollwiderstand des Laufstreifens gesenkt werden; durch geeignete Wahl der Abschnitte ohne Vorsprungvolumen können nachteilige Effekte des Wegbleibens des Vorsprungvolumens geringgehalten werden. Insbesondere kann das Vorsprungvolumen entlang eines Längsverlaufs des Vorsprungvolumens stellenweise unterbrochen sein. Dies kann Vorteile bei der Reifenherstellung, insbesondere in einem Laufstreifen mit schmalen Rillen mit sich bringen, wenn diese mit Lamellenblechen in den Laufstreifen eingeprägt werden.

Dort, wo abschnittsweise kein Vorsprungvolumen neben dem Rillenvolumen verläuft, kann wenigstens abschnittsweise auch kein Fasenvolumen ausgespart sein. Mit anderen Worten können Profilkanten ohne Fase und Vorsprung in dem Laufstreifen vorgesehen sein. Alternativ oder zusätzlich kann dort, wo abschnittsweise kein Vorsprungvolumen neben dem Rillenvolumen verläuft, wenigstens abschnittsweise Fasenvolumen ausgespart sein. Auf diese Weise lassen sich lokal die Vorteile der Fase ohne die Nachteile des Vorsprungs nutzen.

Das Rillenvolumen kann eine oder mehrere schmale Rillen umfassen, wobei eine schmale Rille eine Breite von weniger als 2 mm aufweist. Hierbei kann an die schmale Rille angrenzendes Fasenvolumen ausgespart sein, wobei das an die schmale Rille angrenzende Fasenvolumen und Vorsprungvolumen abschnittsweise in einem Abstand von weniger als 1 mm nebeneinander verlaufen können. Alternativ oder zusätzlich kann Vorsprungvolumen abschnittsweise in einem Abstand von weniger als 1 mm neben der schmalen Rille verlaufen, ohne neben Fasenvolumen zu verlaufen. Auf diese Weise können die erfindungsgemäßen Vorteile auch an schmal ausgeführtem Negativvolumen zur Geltung kommen. Gemäß einer Ausführungsform teilt eine schmale Rille den Laufstreifen wenigstens lokal in einen ersten und einen zweiten Abschnitt, wobei an einer Bremskante des ersten Abschnitts eine Fase und ein Vorsprung angeordnet sind und an der Traktionskante des zweiten Abschnitts keine Fase ausgespart, jedoch ein Vorsprung ausgebildet ist.

Zwischen dem Rillenvolumen können ein oder mehrere Profilblöcke definiert sein, wobei ein Profilblock eine Blockkante mit einer Blockkantenlänge aufweisen kann. Ein Profilblock wird vorzugsweise zu wenigstens einer Seite von einer breiten Rille begrenzt, wobei die Blockkante vorzugsweise an einer der breiten Rille zugewandten Seite des Profilblocks ausgebildet ist. Beispielsweise kann ein Profilblock eine durch eine Umfangsrille von einem restlichen Teil eines Laufstreifenprofils abgegrenzte Schulterrippe sein, wobei die Umfangsrille eine breite Rille ist. In diesem Beispiel würden die Schulterrippe durchziehende schmale Rillen bzw. Einschnitte nicht zu einer Unterteilung der Rippe in kleinere eigenständige Profilblöcke, sondern nur zur Unterteilung der Rippe in Abschnitte führen. Gemäß einem weiteren Beispiel wird ein in der Draufsicht im Wesentlichen viereckiger Profilblock von vier breiten Rillen begrenzt und weist vier Blockkanten auf, von denen jeweils eine einer der breiten Rillen zugewandt ist. Fase und/oder Vorsprung können an dem Profilblock ausgebildet sein, wobei an die Blockkante angrenzendes Fasenvolumen ausgespart sein kann und/oder wobei Vorsprungvolumen in einem Abstand von weniger als 1 mm neben der Blockkante verlaufen kann. Hierbei ist die Blockkante zwischen der Basisfläche und der Rillenflanke oder zwischen der Basisfläche und dem Fasenvolumen bzw. der Fasenfläche definiert.

Das Fasenvolumen kann entlang wenigstens 40% der Blockkantenlänge ausgespart sein. Dieser Anteil kann sich insbesondere auf innerhalb einer Bodenaufstandsfläche angeordnete Blockkanten bzw. Abschnitte von Blockkanten beziehen. Auf diese Weise kommt der vorteilhafte Bremseffekt der Fase ausreichend zur Geltung. Fasen entfalten insbesondere an Kanten mit größerem Richtungsanteil in Axial- als in Umfangsrichtung ihre vorteilhafte Wirkung, bei laufrichtungsgebundenen Profilen weiter insbesondere an auslaufenden Kanten. Daher sind insbesondere diese Kanten auf wenigstens 40% ihrer Länge mit Fasen versehen.

Das Vorsprungvolumen kann entlang wenigstens 67% der Blockkantenlänge in einem Abstand von weniger als 1 mm neben der Blockkante verlaufen. Dieser Anteil kann sich insbesondere auf innerhalb einer Bodenaufstandsfläche angeordnete Blockkanten bzw. Abschnitte von Blockkanten beziehen. Auf diese Weise kommen die vorteilhaften Traktions- und Geräuscheffekt des Vorsprungs ausreichend zur Geltung. Vorsprünge entfalten insbesondere an Kanten mit größerem Richtungsanteil in Axial- als in Umfangsrichtung ihre vorteilhafte Wirkung, bei laufrichtungsgebundenen Profilen weiter insbesondere an einlaufenden Kanten. Daher sind insbesondere diese Kanten auf wenigstens 40% ihrer Länge mit Fasen versehen.

Der Profilblock kann mehrere Blockkanten aufweisen und/oder es können mehrere Profilblöcke mir jeweils wenigstens einer Blockkante in dem Laufstreifen ausgebildet sein. Es kann an einer ersten Blockkante angrenzendes Fasenvolumen ausgespart sein, wobei an einer zweiten Blockkante kein Fasenvolumen ausgespart ist, wobei Vorsprungvolumen jeweils wenigstens abschnittsweise in einem Abstand von jeweils weniger als 1 mm neben der ersten und zweiten Blockkante verläuft.

Das Vorsprungvolumen kann in einem Querschnitt senkrecht zu einem Längsverlauf des Vorsprungvolumens eine Höhe und eine Breite aufweisen. Vorzugsweise ist an einer radialen Oberseite des Vorsprungvolumens, auf dessen Höhe oberhalb der Basisfläche und über dessen Breite hinweg, ein parallel zu der Basisfläche verlaufendes Plateau ausgebildet. Zwischen dem Plateau und der Basisfläche kann das Vorsprungvolumen Übergänge zu der Laufstreifenoberfläche und der Fasenfläche oder zu der Flankenfläche des Rillenvolumens aufweisen, wobei die Übergänge in Radialrichtung oder in einem Winkel zur Radialrichtung verlaufen können; in einer Ausführungsform ist der Übergang an einer dem Rillenvolumen abgewandten Seite konkav verrundet.

Eine Höhe des Vorsprungvolumens über der Basisfläche liegt vorzugsweise in einem Bereich zwischen 0,1 mm und 1 mm, weiter vorzugsweise zwischen 0,2 mm und 0,5 mm. In diesem Bereich kann ein ausreichender Fräse- und Geräuschreduktionseffekt erzielt werden, ohne den Rollwiderstand zu sehr zu beeinträchtigen.

Eine Breite des Vorsprungvolumens parallel zu der Basisfläche und senkrecht zu einem Längsverlauf des Vorsprungvolumens liegt in einem Bereich zwischen 0,2 mm und 2 mm, weiter vorzugsweise zwischen 0,3 mm und 1 mm. Auf diese Weise kann ein guter Kompromiss zwischen Steifigkeit, Fräsvermögen, Geräuschreduktion und Einfluss auf den Rollwiderstand gefunden werden.

Das in dem Laufstreifen ausgebildete Profil kann sich in üblicher Weise in Pitches unterteilen lassen, die im Rahmen einer üblichen Pitchlängenvariation skaliert sein können. Die Breite des Vorsprungvolumens kann in Abhängigkeit von einer Pitchlänge skaliert ausgebildet sein. Hierbei kann insbesondere in einem in Umfangsrichtung längeren Pitch ein in Umfangsrichtung ausgerichteter Breitenanteil des Vorsprungvolumens proportional zur Pitchlänge oder wenigstens durch eine monoton steigende Funktion an die Pitchlänge gekoppelt skaliert werden. Durch eine solche Variation kann ein Frequenzspektrum verbreitert und das Abrollgeräusch entsprechend verbessert werden.

Das Fasenvolumen kann in einem Querschnitt senkrecht zu einem Längsverlauf des Fasenvolumens und/oder senkrecht zu einem Längsverlauf des Rillenvolumens eine radiale Tiefe und eine parallel zur Basisfläche verlaufende Weite aufweisen. Hierbei wird die radiale Tiefe als maximale Erstreckung des Fasenvolumens unterhalb der Basisfläche bestimmt, wobei die Weite eine Lücke zwischen einer Grenze zwischen dem Fasenvolumen und der Basisfläche auf der einen Seite und einer Grenze zwischen dem Fasenvolumen und der Flankenfläche des Rillenvolumens auf der anderen Seite bemisst. Gemäß einer bevorzugten Ausführungsform wird eine Fasenfläche in dem Querschnitt durch eine Hypotenuse eines Dreiecks beschrieben, wobei die Tiefe und die Weite die Katheten des Dreiecks beschreiben.

Die radiale Tiefe des Fasenvolumens kann in einem Bereich zwischen 0,3 mm und 67% der Profiltiefe, vorzugsweise zwischen 0,5 mm und 50% der Profiltiefe liegen. Die Weite des Fasenvolumens kann in einem Bereich zwischen 0,5 mm und 3 mm, vorzugsweise zwischen 0,5 mm und 2 mm liegen. Auf diese Weise kann ein guter Kompromiss zwischen der Wirksamkeit der Fase und deren Bestand über die Lebensdauer des Laufstreifens auf der einen Seite und nachteiligen Auswirkungen einer zu großen Fase auf der anderen Seite gefunden werden.

Die radiale Tiefe des Fasenvolumens und/oder die Weite des Fasenvolumens können entlang des Längsverlaufs des Fasenvolumens bzw. des Rillenvolumens variieren. Mit anderen Worten kann der Querschnitt der Fase entlang ihrer Längserstreckung veränderlich gestaltet sein. Auf diese Weise lassen sich die Auswirkungen der Vor- und Nachteile einer größeren oder kleineren Fase in Abhängigkeit von einer Position in dem Laufstreifen feinabstimmen. Gemäß einer Ausführungsform kann eine Fasenfläche dreieckig sein, wobei sich die Fase von einer Position maximaler Ausprägung zu einem oder zu beiden Rändern der Fase hin vollständig zurückentwickeln kann.

Es kann an ersten Positionen in dem Laufstreifen Fasenvolumen ausgespart sein, wobei der Laufstreifen an diesen ersten Positionen im bestimmungsgemäßen Betrieb des Laufstreifens an einem Fahrzeugreifen einer höheren Beanspruchung ausgesetzt ist als an zweiten Positionen, wobei an den zweiten Positionen kein Fasenvolumen ausgespart ist. Hierbei kann an den ersten und zweiten Positionen jeweils wenigstens abschnittsweise Vorsprungvolumen ausgebildet sein. Eine erste bzw. zweite Position kann beispielsweise eine Blockkante oder ein Abschnitt einer Blockkante sein. Eine höhere Beanspruchung lässt sich beispielsweise durch Fahrversuche ermitteln, wobei Positionen besonderer Beanspruchung sich im Vergleich zu anderen Positionen durch höheren Abrieb oder stärkere Beschädigungen auszeichnen können. Erste Positionen können insbesondere an innerhalb des Reifenlatsches auslaufenden Profilkanten gegeben sein. Alternativ oder zusätzlich können aber auch parallel zur Umfangsrichtung verlaufende Profilkanten erste Positionen umfassen, wobei hier beim Handling des Reifens entstehende Seitenkräfte eine Rolle bei der entsprechend erhöhten Beanspruchung in den ersten Positionen spielen können. Weiterhin alternativ oder zusätzlich können besonders exponierte Positionen im Laufstreifenprofil erste Positionen sein, wie beispielsweise konvexe Ecken eines Profilblocks.

In dem Laufstreifen kann ein direktionales Profil ausgebildet sein, wobei an Bremskanten des Profils Fasenvolumen ausgespart ist und wobei an Traktionskanten des Profils kein Fasenvolumen ausgespart ist. Hierbei kann an den mit Fasenvolumen ausgestatteten Bremskanten und an den ohne Fasenvolumen ausgestalteten Traktionskanten jeweils wenigstens abschnittsweise Vorsprungvolumen ausgebildet sein. Ein direktionales Profil kann v-förmige Rillen und Blockstrukturen aufweisen, wie sie beispielsweise aus Winterreifen oder Ganzjahresreifen bekannt sind. Durch die Fase an den Bremskanten wird der Roll-in-Effekt wirksam reduziert; durch den Verzicht auf die Fase an den Traktionskanten werden Vorteile im Reibwert und Geräuschverhalten erzielt.

Die vorliegende Erfindung betrifft zudem einen Fahrzeugreifen, umfassend einen erfindungsgemäßen Laufstreifen, vorzugsweise einen erfindungsgemäßen Laufstreifen wie im vorliegenden Text als bevorzugt beschrieben. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge. Erfindungsgemäße Fahrzeugreifen können für Felgengrößen in einem Bereich zwischen 13 Zoll und 24 Zoll ausgelegt sein.

Die Erfindung betrifft auch eine Reifenform zur Herstellung eines erfindungsgemäßen Laufstreifens und/oder Fahrzeugreifens.

Der Laufstreifen kann mit weiteren Merkmalen fortgebildet werden, die im Zusammenhang mit dem erfindungsgemäßen Fahrzeugreifen und/oder der erfindungsgemäßen Reifenform beschrieben sind. Der Fahrzeugreifen kann mit weiteren Merkmalen fortgebildet werden, die im Zusammenhang mit dem erfindungsgemäßen Laufstreifen und/oder der erfindungsgemäßen Reifenform beschrieben sind. Die Reifenform kann mit weiteren Merkmalen fortgebildet werden, die im Zusammenhang mit dem erfindungsgemäßen Laufstreifen und/oder dem erfindungsgemäßen Fahrzeugreifen beschrieben sind.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine seitliche Ansicht einer Ausführungsform eines erfindungsgemäßen Fahrzeugreifens,
Figur 2 schematisch und ausschnittsweise eine Draufsicht auf eine erste Ausführungsführungsform eines erfindungsgemäßen Laufstreifens,
Figur 3 schematisch und ausschnittsweise eine Draufsicht auf eine zweite Ausführungsführungsform eines erfindungsgemäßen Laufstreifens,
Figur 4 schematisch eine Schnittansicht gemäß der Linie IV-IV in Figur 3,
Figur 5 schematisch und ausschnittsweise eine Draufsicht auf eine dritte Ausführungsführungsform eines erfindungsgemäßen Laufstreifens,
Figur 6 schematisch eine Schnittansicht gemäß der Linie VI-VI in Figur 5,
Figur 7 schematisch eine Schnittansicht durch eine schmale Rille gemäß einer weiteren Ausführungsform der Erfindung.

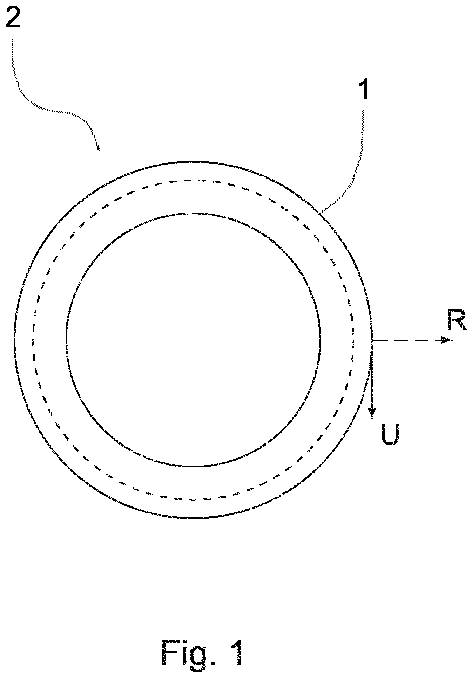

Figur 1 zeigt schematisch eine seitliche Ansicht einer Ausführungsform eines erfindungsgemäßen Fahrzeugreifens 2. Die Radialrichtung R und die Umfangsrichtung U sind mit Pfeilen gekennzeichnet. Radial außen an dem Reifen 2 ist eine Ausführungsform eines erfindungsgemäßen Laufstreifens 1 angeordnet.

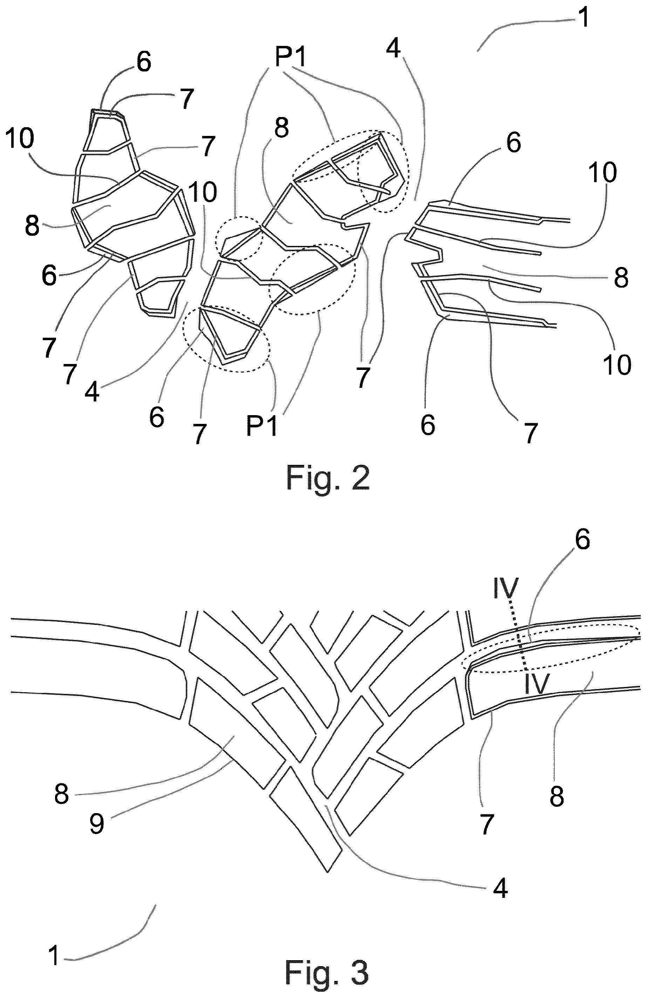

Figur 2 zeigt schematisch und ausschnittsweise eine Draufsicht auf eine erste Ausführungsführungsform eines erfindungsgemäßen Laufstreifens 1. Es sind drei Profilblöcke 8 zu sehen, von denen der in der Zeichnung linke Profilblock 8 in einer axialen Mitte des Laufstreifens 1 angeordnet ist und von einem nicht eingezeichneten Reifenäquator geschnitten wird; die linke axiale Hälfte des Laufstreifens 1 ist nicht dargestellt. Der in der Zeichnung rechte Profilblock 8 ist in einer Schulterprofilblockreihe angeordnet; die Zeichnungsebene endet rechts am Rande der Bodenaufstandsfläche. Die gezeigten Profilblöcke 8 beschränken sich auf die Profilblöcke 8 eines Pitches, wobei in dem Laufstreifen 1 in Umfangsrichtung vorn und hinten weitere Profilblöcke 8 ähnlicher Geometrie und Anordnung ausgebildet sind, die in der Zeichnung oben und unten jedoch nicht dargestellt sind. Zwischen den Profilblöcken 8 ist Rillenvolumen 4 ausgebildet. Die Profilblöcke 8 sind zudem von schmalen Rillen 10 durchzogen, die zusätzliche Traktion sowie Vorteile im Nässe- und Winterverhalten bringen können.

An den Kanten der Profilblöcke 8 bzw. an den Rändern des Rillenvolumens 4 ist abschnittsweise Fasenvolumen 6 ausgespart. Innerhalb der Bodenaufstandsfläche verläuft durchgängig Vorsprungvolumen 7 entweder neben dem Fasenvolumen 6 oder direkt neben dem Rillenvolumen 4. In dem in der Zeichnung mittleren Profilblock 8 sind Positionen P1 mit gestrichelten Linien eingekreist, an denen sowohl Vorsprünge 7 als auch Fasen 6 ausgebildet sind, wobei an nicht eingekreisten zweiten Positionen an dem mittleren Profilblock nur Vorsprünge 7 ausgebildet sind.

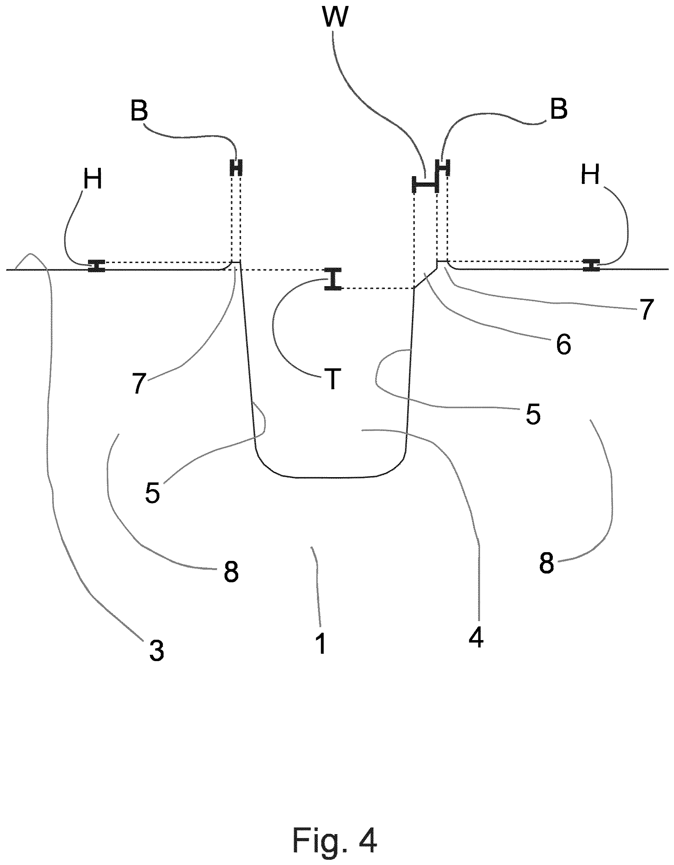

Figur 3 zeigt schematisch und ausschnittsweise eine Draufsicht auf eine zweite Ausführungsführungsform eines erfindungsgemäßen Laufstreifens 1. Es sind v-förmig angeordnete Profilblöcke 8 und Rillenvolumen 4 zu erkennen, wobei der Laufstreifen 1 dazu ausgelegt ist, bei Vorwärtsfahrt in Richtung der Spitze der v-Form, also in der Zeichnung nach unten abzurollen. Alle Profilblöcke 8 können an ihren Blockkanten 9 mit Vorsprüngen 7 und/oder Fasen 6 ausgestattet sein. Dies ist jedoch nur bei den in Figur 3 rechts zu sehenden Profilblöcken 8 zeichnerisch dargestellt. Demgemäß wird der rechts unten dargestellte Profilblock 8 von Vorsprungvolumen 7 umlaufen. An der Bremskante, in Figur 3 mit einer gestrichelten Linie umrissen, ist zusätzlich Fasenvolumen 6 ausgespart. Die Linie IV-IV markiert die Position eines Querschnitts durch den Laufstreifen 1, der in Figur 4 dargestellt wird.

Figur 4 zeigt schematisch eine Schnittansicht gemäß der Linie IV-IV in Figur 3. In der Zeichnungsebene von unten nach oben verläuft die Radialrichtung. In der Mitte der Zeichnung ist Rillenvolumen 4 zu erkennen, welches zwischen zwei Flankenflächen 5 definiert ist. Entlang eines Großteils des gezeigten Ausschnitts wird der Laufstreifen 1 radial oben von einer mit der Basisfläche 3 zusammenfallenden Laufstreifenoberfläche begrenzt. Über der Basisfläche 3 erhebt sich zu beiden Seiten des Rillenvolumens 4 Vorsprungvolumen 7 um eine Höhe H. Die Vorsprünge 7 weisen auf der Höhe H über eine Breite B hinweg jeweils ein Plateau auf. Auf den von der Rille 4 abgewandten Seiten gehen die Vorsprünge 7 verrundet in die Basisfläche 3 über. Auf den der Rille 4 zugewandten Seiten weisen die Vorsprünge 7 Vorsprungflanken auf, die in ihrer Neigung gegenüber der Radialrichtung der Neigung der Flankenflächen 5 des Rillenvolumens 4 ähneln. Auf der in der Zeichnung linken Seite der Rille 4, bzw. an einer Traktionskante des links dargestellten Profilblocks 8, ist kein Fasenvolumen ausgespart. Auf der in der Zeichnung rechten Seite der Rille 4, bzw. an einer Bremskante des rechts dargestellten Profilblocks 8 (vgl. eingekreiste Position in Figur 3), ist Fasenvolumen 6 ausgespart. Das Fasenvolumen 6 tritt um eine Weite W hinter die Flankenfläche 5 und um eine Tiefe T unterhalb die Basisfläche 3 in den Laufstreifen 1 zurück. Das Vorsprungvolumen 7 grenzt direkt, also in einem Abstand von 0 mm an das Fasenvolumen 6 an. Die Kombination aus Vorsprung 7 und Fase 6 an der Bremskante sorgt für gute Traktion und vorteilhafte Geräuscheigenschaften sowie gute Trockenbremseigenschaften, der Verzicht auf die Fase 6 an der Traktionskante schafft zusätzliche Laufstreifenoberfläche und verringert das Profilnegativ, was sich positiv auf einen Reibwert und die Schallpropagation in dem Laufstreifen auswirkt.

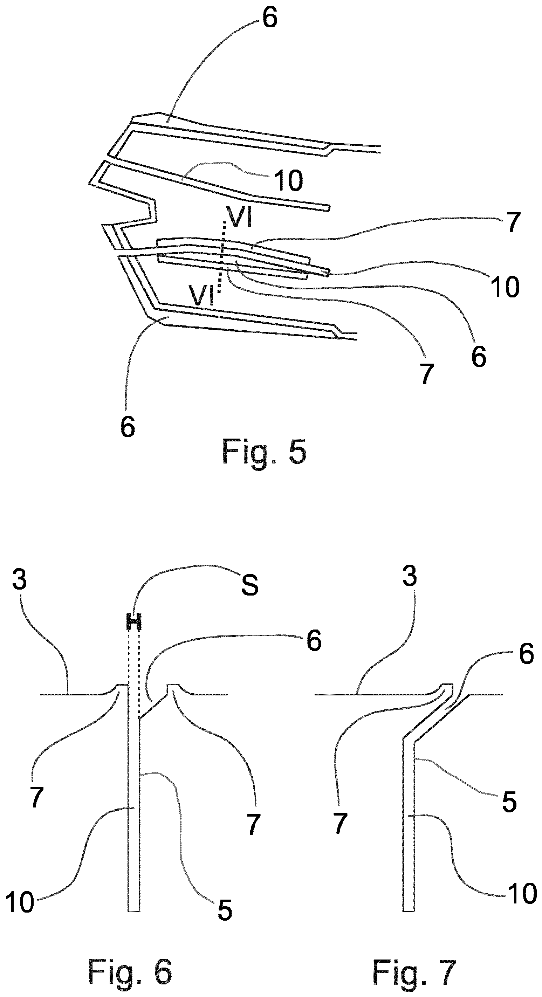

Figur 5 zeigt schematisch und ausschnittsweise eine Draufsicht auf eine dritte Ausführungsführungsform eines erfindungsgemäßen Laufstreifens, wobei sich der Ausschnitt auf einen Schulterprofilblock beschränkt. In dem Profilblock sind schmale Rillen 10 ausgebildet, die den Profilblock 8 bzw. den Laufstreifen 1 in Abschnitte unterteilen. An der in der Zeichnung unteren schmalen Rille 10 ist an einer Seite Fasenvolumen 6 ausgespart, wobei auf beiden Seiten Vorsprungvolumen 7 ausgebildet ist, welches in einem Abstand von weniger als 1 mm neben dem Fasenvolumen 6 bzw. direkt neben der schmalen Rille verläuft. Die Linie VI-VI markiert die Position eines Querschnitts durch den Laufstreifen 1, der in Figur 6 dargestellt wird.

Figur 6 zeigt schematisch eine Schnittansicht gemäß der Linie VI-VI in Figur 5. Die schmale Rille 10 hat eine Breite S von weniger als 2 mm. An die schmale Rille 10 angrenzend ist unter der Basisfläche 3 des Laufstreifens 1 und hinter der Flankenfläche 5 der schmalen Rille 3 zurücktretendes Fasenvolumen 6 ausgespart. Direkt an das Fasenvolumen 6 angrenzend ist Vorsprungvolumen 7 ausgebildet. Auf der gegenüberliegenden Seite der schmalen Rille 10 ist kein Fasenvolumen 6 aber direkt an die schmale Rille 10 angrenzendes Vorsprungvolumen 7 ausgebildet. Vorzugsweise würde der Laufstreifen 1 mit einer in der Figur 6 rechts dargestellten Seite bei Vorwärtsfahrt zuerst in einen Reifenlatsch eintreten, sodass die Fase an einer Bremskante des rechts dargestellten Laufstreifenabschnitts ausgebildet wäre.

Figur 7 zeigt schematisch eine Schnittansicht durch eine schmale Rille 10 gemäß einer weiteren Ausführungsform der Erfindung. Die schmale Rille 10 weist die Form eines manchmal auch als Schaufellamelle bezeichneten 3D-Einschnitts auf. Die im radial oberen Bereich der schmalen Rille abgeschrägt Form führt zu einer an eine Fase erinnernden Abschrägung des in der Figur 7 rechts dargestellten Laufstreifenabschnitts, sodass das radial darüber ausgebildete Negativvolumen auch als Fasenvolumen 6 bezeichnet werden kann. Vorzugsweise gleicht die Abrollrichtung bei Vorwärtsfahrt der für Figur 6 beschriebenen.

### Bezugszeichenliste

- 1: Laufstreifen
- 2: Fahrzeugreifen
- 3: Basisfläche
- 4: Rillenvolumen
- 5: Flankenfläche
- 6: Fasenvolumen
- 7: Vorsprungvolumen
- 8: Profilblock
- 9: Blockkante
- 10: schmale Rille
- B: Breite (des Vorsprungvolumens)
- H: Höhe (des Vorsprungvolumens)
- R: Radialrichtung
- S: Breite der schmalen Rille
- T: Tiefe (des Fasenvolumens)
- U: Umfangsrichtung
- W: Weite (des Fasenvolumens)

## Patentansprüche

1. Laufstreifen (1) für einen Fahrzeugreifen (2), wobei in dem Laufstreifen (1) radial unterhalb einer Basisfläche (3) Rillenvolumen (4) ausgespart ist, wobei das Rillenvolumen (4) seitlich von Flankenfläche (5) begrenzt wird, wobei unterhalb der Basisfläche (3) und hinter der Flankenfläche (5) in den Laufstreifen (1) zurücktretendes Fasenvolumen (6) ausgespart ist, wobei radial oberhalb der Basisfläche (3) verlaufendes Vorsprungvolumen (7) ausgebildet ist, wobei das Fasenvolumen (6) und das Vorsprungvolumen (7) abschnittsweise in einem Abstand von weniger als 1 mm nebeneinander verlaufen,
**dadurch gekennzeichnet,**
**dass** Vorsprungvolumen (7) abschnittsweise in einem Abstand von weniger als 1 mm neben dem Rillenvolumen (4) verläuft, ohne neben Fasenvolumen (6) zu verlaufen.

2. Laufstreifen (1) gemäß Anspruch 1, **dadurch gekennzeichnet, dass** abschnittsweise kein Vorsprungvolumen (7) neben dem Rillenvolumen (4) verläuft.

3. Laufstreifen (1) gemäß Anspruch 2, **dadurch gekennzeichnet, dass** dort, wo abschnittsweise kein Vorsprungvolumen (7) neben dem Rillenvolumen (4) verläuft, wenigstens abschnittsweise auch kein Fasenvolumen (6) ausgespart ist und/oder dass dort, wo abschnittsweise kein Vorsprungvolumen (7) neben dem Rillenvolumen (4) verläuft, wenigstens abschnittsweise Fasenvolumen (6) ausgespart ist.

4. Laufstreifen (1) gemäß einem der Ansprüche 1 bis 3, **dadurch gekennzeichnet, dass** das Rillenvolumen (4) eine schmale Rille (10) umfasst, wobei die schmale Rille (10) eine Breite von weniger als 2 mm aufweist, wobei an die schmale Rille (10) angrenzendes Fasenvolumen (6) ausgespart ist, wobei das an die schmale Rille (10) angrenzende Fasenvolumen (6) und Vorsprungvolumen (7) abschnittsweise in einem Abstand von weniger als 1 mm nebeneinander verlaufen und/oder wobei Vorsprungvolumen (7) abschnittsweise in einem Abstand von weniger als 1 mm neben der schmalen Rille (10) verläuft, ohne neben Fasenvolumen (6) zu verlaufen.

5. Laufstreifen (1) gemäß einem der Ansprüche 1 bis 4, **dadurch gekennzeichnet, dass** zwischen dem Rillenvolumen (4) ein Profilblock (8) definiert ist, wobei der Profilblock (8) eine Blockkante (9) mit einer Blockkantenlänge aufweist, wobei an die Blockkante (9) angrenzendes Fasenvolumen (6) ausgespart ist und/oder wobei Vorsprungvolumen (7) in einem Abstand von weniger als 1 mm neben der Blockkante (9) verläuft.

6. Laufstreifen (1) gemäß Anspruch 5, **dadurch gekennzeichnet, dass** das Fasenvolumen (6) entlang wenigstens 40% der Blockkantenlänge ausgespart ist.

7. Laufstreifen (1) gemäß einem der Ansprüche 5 oder 6, **dadurch gekennzeichnet, dass** das Vorsprungvolumen (7) entlang wenigstens 67% der Blockkantenlänge in einem Abstand von weniger als 1 mm neben der Blockkante (9) verläuft.

8. Laufstreifen (1) gemäß einem der Ansprüche 1 bis 7, **dadurch gekennzeichnet, dass** eine Höhe (H) des Vorsprungvolumens (7) über der Basisfläche (3) in einem Bereich zwischen 0,1 mm und 1 mm, vorzugsweise zwischen 0,2 mm und 0,7 mm, weiter vorzugsweise zwischen 0,3 mm und 0,5 mm liegt.

9. Laufstreifen (1) gemäß einem der Ansprüche 1 bis 8, **dadurch gekennzeichnet, dass** eine Breite (B) des Vorsprungvolumens (7) senkrecht zu der Basisfläche (3) und senkrecht zu einem Längsverlauf des Vorsprungvolumens (7) in einem Bereich zwischen 0,2 mm und 2 mm, vorzugsweise zwischen 0,3 mm und 1 mm liegt.

10. Laufstreifen (1) gemäß einem der Ansprüche 1 bis 9, **dadurch gekennzeichnet, dass** eine Breite (B) des Vorsprungvolumens (7) parallel zu der Basisfläche (3) und senkrecht zu einem Längsverlauf des Vorsprungvolumens (7) in Abhängigkeit von einer Pitchlänge skaliert ausgebildet ist.

11. Laufstreifen (1) gemäß einem der Ansprüche 1 bis 10, **dadurch gekennzeichnet, dass** eine radiale Tiefe (T) des Fasenvolumens (6) unterhalb der Basisfläche (3) in einem Bereich zwischen 0,3 mm und 67% der Profiltiefe, vorzugsweise zwischen 0,5 mm und 50% der Profiltiefe liegt und/oder dass eine Weite (W) des Fasenvolumens (6) parallel zu der Basisfläche (3) und senkrecht zu einem Längsverlauf des Rillenvolumens (4) in einem Bereich zwischen 0,5 mm und 3 mm, vorzugsweise zwischen 0,5 mm und 2 mm liegt.

12. Laufstreifen (1) gemäß einem der Ansprüche 1 bis 11, **dadurch gekennzeichnet, dass** eine radiale Tiefe (T) des Fasenvolumens (6) unterhalb der Basisfläche (3) und/oder eine Weite (W) des Fasenvolumens (6) parallel zu der Basisfläche (3) und senkrecht zu einem Längsverlauf des Rillenvolumens (4) entlang des Längsverlaufs des Rillenvolumens (4) variieren.

13. Laufstreifen (1) gemäß einem der Ansprüche 1 bis 12, **dadurch gekennzeichnet, dass** an ersten Positionen (P1) in dem Laufstreifen (1) Fasenvolumen (6) ausgespart ist, wobei der Laufstreifen (1) an den ersten Positionen (P1) im bestimmungsgemäßen Betrieb einer höheren Beanspruchung ausgesetzt ist als an zweiten Positionen, wobei an den zweiten Positionen kein Fasenvolumen (6) ausgespart ist.

14. Laufstreifen (1) gemäß einem der Ansprüche 1 bis 13, **dadurch gekennzeichnet, dass** in dem Laufstreifen (1) ein direktionales Profil ausgebildet ist, wobei an Bremskanten des Profils Fasenvolumen (6) ausgespart ist, wobei an Traktionskanten des Profils kein Fasenvolumen (6) ausgespart ist.

15. Fahrzeugreifen (2), umfassend einen Laufstreifen (1) gemäß einem der Ansprüche 1 bis 14.
